# EUROPEAN PATENT APPLICATION

(11) **EP 1 808 756 A1**
(43) Date of publication of application: **18.07.2007**
(21) Application number: 06000578.2
(22) Date of filing: 12.01.2006
(51) Int. Cl.: G06F 3/044, G02F 1/133

(54) **Display panel having touching circuit**

(71) Applicant: TrendON Touch Technology Corp., Taipei (TW)
(72) Inventor: Chien, Shun-Ta, Dayuan Township Taoyuan County (TW)
(74) Representative: Haft, von Puttkamer, Berngruber

(57) **Abstract**

The present invention is to provide a display panel comprising an upper polarizer (21); a lower polarizer (21); a lower glass substrate (22) provided on the lower polarizer (21); an upper glass substrate (22) provided below the upper polarizer (21); an upper transparent ITO layer (23) provided under the upper glass substrate (22); a lower transparent ITO layer (23) provided on the lower glass substrate (22); an intermediate liquid crystal layer (24) sandwiched by the transparent ITO layers (23); and a touching circuit layer (25) sandwiched by the upper polarizer (21) and the upper glass substrate (22) and disposed above the liquid crystal layer (24), enabling the touching circuit to be directly mounted in the display panel rather than assembling together after manufacturing.

## Description

### FIELD OF THE INVENTION

The present invention relates to display panels and more particularly to such a display panel having a touching circuit layer thereon in order to save the glass substrate and transparent ITO layers needed for manufacturing the touching circuit in the prior art and avoid the procedures of assembling the display panel and touching circuit together.

### BACKGROUND OF THE INVENTION

Products related to information, communications, and electronics have known a rapid, spectacular development in recent years due to technological advancements in which electronic products further have enhanced features and are adapted to cooperate with one of many different input devices. In detail, a touch panel may be used as input means of an electronic product as a replacement of a conventional input device (e.g., keyboard or mouse). The development of touch panel is a revolution to the conventional input devices. A touch panel has a friendly input interface. Almost everyone may use his/her finger or a light pen to point to an icon on the touch panel and execute same without specific instruction or learning. Thus, touch panels are widely mounted in various electronic products including palm-sized PC (personal computer), PDA (Personal Digital Assistant), and information appliance. Further, touch panels are applied in workstation system, guiding system, medical purposes, information service station, and computer aided instruction for children. In brief, applications of touch panel are diversified and its market is growing rapidly.

A touch panel is implemented as a glass panel comprised of a conductive glass and a conductive film as detailed later. Buses and control ICs (integrated circuits) of a circuit board on the touch panel are disposed corresponding to locations of icons on the screen. Thus, pointing to the icon on the touch panel may execute the function that the icon represents. An electronic product incorporating a touch panel may allow a user to touch the screen for direct input. Hence, other conventional input devices are not necessary to mount in the electronic product. As a result, more space is saved for permitting the installation of a larger display panel for user browsing.

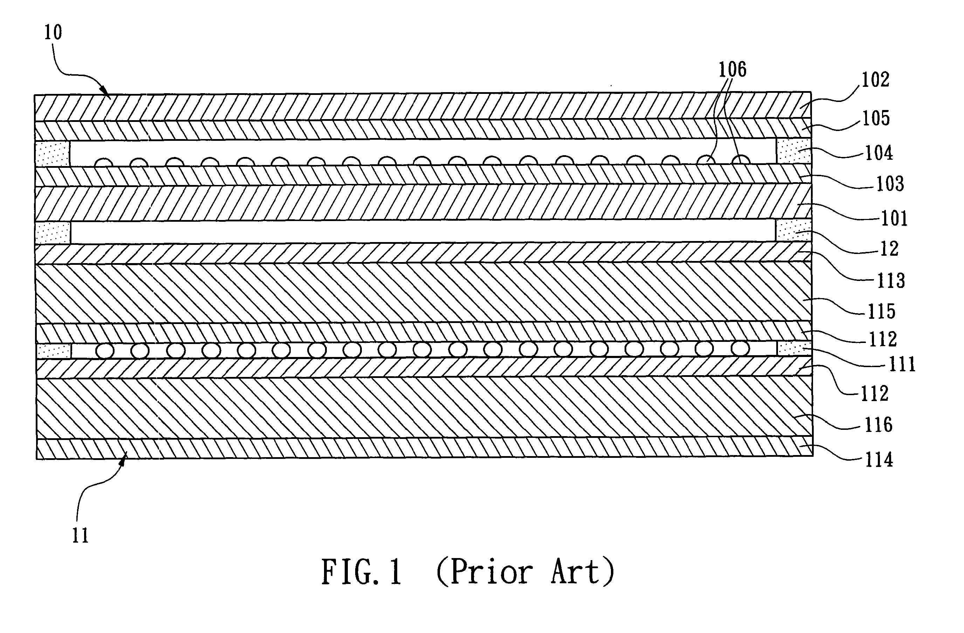

A well known touch panel mounted on a display is shown in FIG. 1. As shown, a touch panel 10 is mounted on a panel 11 of a display. For the touch panel 10 on the panel 11, a sponge 12 is provided between the touch panel 10 and the panel 11. The touch panel 10 comprises an ITO (indium tin oxide) glass 101 coated with an ITO conductive layer, and a transparent ITO film 102 formed of ITO material. On the transparent ITO glass 101 and the ITO film 102, silver paste is printed on edges of the ITO glass 101 and the ITO film 102 by screen printing process so as to form a required control circuit. From the lower transparent ITO glass 101 and the top transparent ITO film 102, there are provided a first Isolation layer 103, an adhesive layer 104, and a second isolation layer 105. A plurality of dot spacers 106 are further spaced between the lower transparent ITO glass 101 and the top transparent ITO film 102.

The display is an LCD (liquid crystal display). The panel 11 is comprised of a liquid crystal layer 111, two transparent ITO layers 112, an upper polarizer 113, a lower polarizer 114, an upper glass substrate 115, and a lower glass substrate 116. The upper polarizer 113 and the lower polarizer 114 are provided on a top surface and on a bottom surface of the panel 11 respectively. The liquid crystal layer 111 is provided in the panel 11. The transparent ITO layers 112 are provided on top and bottom of the liquid crystal layer 111 respectively. The upper glass substrate 115 is sandwiched by the upper transparent ITO layer 112 and the upper polarizer 113. The lower glass substrate 116 is sandwiched by the lower transparent ITO layer 112 and the lower polarizer 114. Thus, in response to projecting an icon on the panel 11, a user may point to the icon by touching a point on the touch panel 10 corresponding to the icon for direct input and/or operation.

However, the panel 11, the touch panel 10, the transparent ITO glass 101, the upper glass substrate 115, and lower glass substrate 116 mounted in the well known display are formed of the same material. Also, the panel 11 and the touch panel 10 are formed separately prior to assembling together. Disadvantageously, for manufacturers manufacturing the panel 11 and the touch panel 10 as an integral member will consume more material and greatly increase the cost of investing manufacturing equipment. Further, the touch panel 10 is required to conform to the shape and size of the panel 11 in a design phase. Furthermore, it is required to assemble the panel 11 and the touch panel 10 together after manufacturing both the panel 11 and the touch panel 10. This not only results in a great increase in the manufacturing cost but also prolongs the manufacturing time and lowers production. Thus, it is desirable among manufacturers to improve the existing technology and decrease the manufacturing time and cost in order to survive in the competitive market.

Touch technology was incorporated in to the LCD by other inventors previously. US Patent 6,483,498 teaches a method of incorporating resistive touch screen in to an LCD. This technology requires flexible upper sheet and the physical touch between the two conductive layers required to create the touch. The method might be susceptible to the shortcomings of the resistive type touch screens. Furthermore this approach might require conductive sheets with uniform conductivity to be incorporated into the LCD. US patent 6,501,529B1 teaches how to incorporate a resistive touch technology in to a given LCD. This approach uses spacers in the Liquid Crystal area of the LCD screen to lower the amount of movement on the top surface. There is still movement on the surface to make contact between the two conductive materials to detect the touch position. This might be detrimental to the unit's reliability. It is also important to note that adding spacer material between the top and the bottom surfaces would be very challenging manufacturing operation. US patent 5,105,186 teaches a method of inserting trasflectors in the LCD. When the light goes through the front of the screen, it reflects from the transflectors and detected by the phototransistors. If the light is blocked, then the amount of light intensity detected by the phototransistor decreases indicating a touch location. This method has issues that are inherent to any photosensitive devices. The most important and hard to overcome issue is the scattered ambient light in the environment which would affect the operation of the screen. US patent 6,831, 710 also teaches the construction of an LCD screen with integrated photosensitive devices. When the screen is touched, the light is blocked and this blockage is detected by the photosensitive device inside the LCD module. The issue with this approach is that the scattered light in the environment might cause false touches or missed touches. Another disadvantage is that the light transmission is reduced by the photosensitive elements that are placed in each pixel. This reduces the unit brightness.

Above inventions utilize either the resistive or photosensitive approach to detect the touch location. These approaches have some inherent issues. Therefore it is necessary to use a new design that does not get impacted by the scattered light in the environment. It is also desired to use a design where the touch is not generated by the connection of two conductive layers. Here, a capacitive touch screen is incorporated inside the LCD panel to eliminate the shortcomings and risks associated with the previous methods. The embodiments that are discussed below solve those issues that other approaches had previously. When details of the invention below is reviewed, it will be clear how those issues are resolved with this new method.

### SUMMARY OF THE INVENTION

After considerable research and experimentation, a display panel having a touching circuit according to the present invention has been devised so as to overcome the above drawbacks (e.g., separate manufacture, assembly, cost increase, light dependence, reliability issues etc.) of the prior art.

It is an object of the present invention to provide a display panel comprising an upper polarizer; a lower polarizer; a lower glass substrate provided on the lower polarizer; an upper glass substrate provided below the upper polarizer; an upper transparent ITO layer provided under the upper glass substrate; a lower transparent ITO layer provided on the lower glass substrate; an intermediate liquid crystal layer sandwiched by the transparent ITO layers; and a touching circuit layer sandwiched by the upper polarizer and the upper glass substrate and disposed above the liquid crystal layer. By configuring as above, the touching circuit layer is mounted in the display panel rather than assembling together after manufacturing.

It is another object of the present invention to provide A display panel comprising a top polarizer; a bottom polarizer; a lower glass substrate provided above the bottom polarizer; an upper glass substrate provided below the top polarizer; an upper transparent ITO layer provided under the upper glass substrate; a lower transparent ITO layer provided on the lower glass substrate; an intermediate liquid crystal layer sandwiched by the transparent ITO layers; an upper touching circuit layer sandwiched by the top polarizer and the upper glass substrate; and a lower touching circuit layer sandwiched by the bottom polarizer and the lower glass substrate; wherein the upper and the lower touching circuit layers are spaced from top and bottom surfaces of the liquid crystal layer respectively. By utilizing this display panel having two coating circuit layers, it is not necessary of manufacturing the touch panel and the display panel separately and assembling them as experienced by the prior art, resulting in a great reduction in the manufacturing cost, the assembly cost, and the assembly time.

The above and other objects, features and advantages of the present invention will become apparent from the following detailed description taken with the accompanying drawings.

### BRIEF DESCRIPTION OF THE DRAWINGS

FIG. 1 is a cross-sectional view of a conventional touch panel mounted on a display;
FIG. 2 is a cross-sectional view of a display panel having a touching circuit according to the invention;
FIG. 3 is a perspective view of a touching circuit layer according to the invention;
FIG. 4 is a cross-sectional view of a preferred embodiment of the invention;
FIG. 5 is a cross-sectional view of another display panel having a touching circuit according to the invention; and
FIGS. 6, 7, and 8 are perspective views of first, second, and third preferred embodiments of another display panel having a touching circuit according to the invention respectively.

### DETAILED DESCRIPTION OF THE PREFERRED EMBODIMENTS

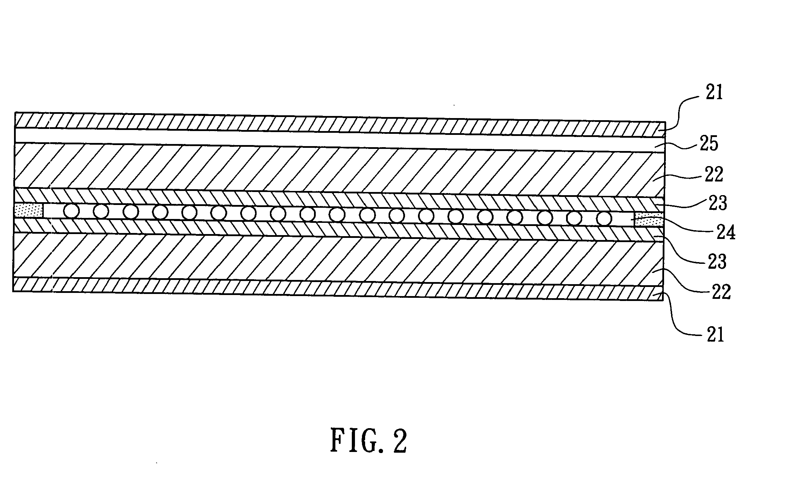

Referring to FIG. 2, a display panel having a touching circuit in accordance with the invention is shown. The display panel comprises an upper polarizer 21, a lower polarizer 21, a lower glass substrate 22 provided on the lower polarizer 21, an upper glass substrate 22 provided below the upper polarizer 21, two spaced transparent ITO layers 23 in which the upper transparent ITO layer 23 is provided under the upper glass substrate 22 and the lower transparent ITO layer 23 is provided on the lower glass substrate 22, a liquid crystal layer 24 sandwiched by the transparent ITO layers 23, and a touching circuit layer 25 sandwiched by the upper polarizer 21 and the upper glass substrate 22 above the liquid crystal layer 24. By configuring as above, the touching circuit layer 25 is mounted in the display panel rather than externally thereof, resulting in a great reduction in the manufacturing cost, the assembly cost, and the assembly time.

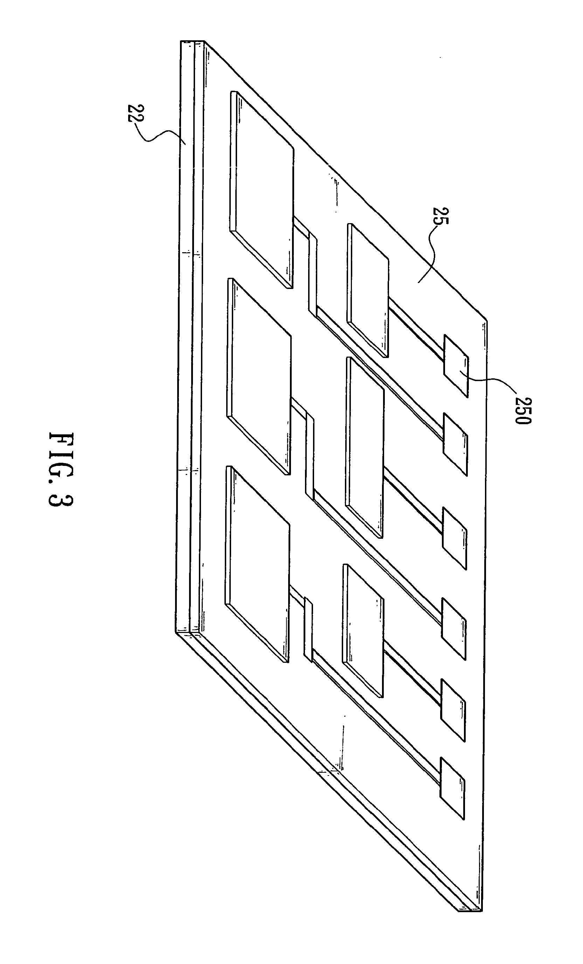

Referring to FIG. 3 in conjunction with FIG. 2, in the preferred embodiment the touching circuit layer 25 is sandwiched by the upper polarizer 21 and the upper glass substrate 22. The touching circuit layer 25 comprises a plurality of coating circuits 250 formed on the upper glass substrate 22 facing the upper polarizer 21. The coating circuit 250 is implemented as an LCD transparent circuit. Thus, it can not only save materials of manufacturing the transparent ITO glass and the transparent ITO film for touching circuit but also save time of assembling the separately manufactured touch panel and display panel as experienced by the prior art.

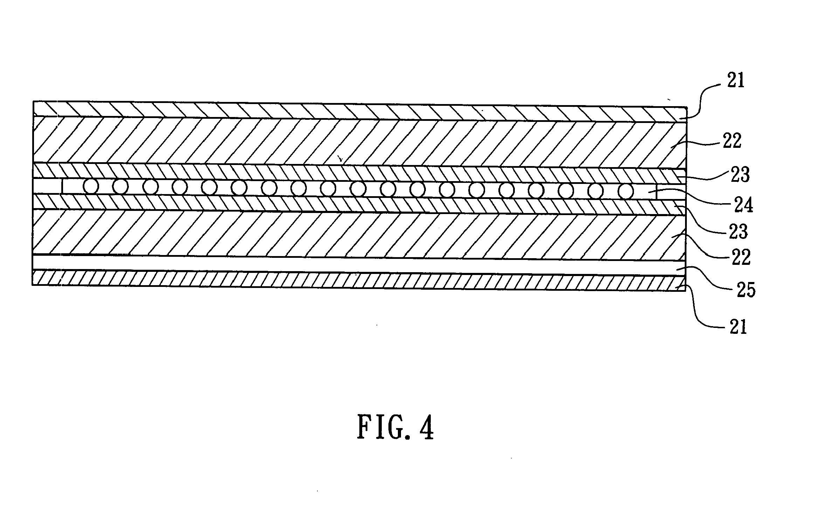

Referring to FIG. 4 in conjunction with FIG. 2, in the preferred embodiment the touching circuit layer 25 is above the liquid crystal layer 24 and is sandwiched by the upper polarizer 21 and the upper glass substrate 22 (see FIG. 2). Alternatively, the touching circuit layer 25 is below the liquid crystal layer 24 and is sandwiched by the lower polarizer 21 and the lower glass substrate 22 (see FIG. 4).

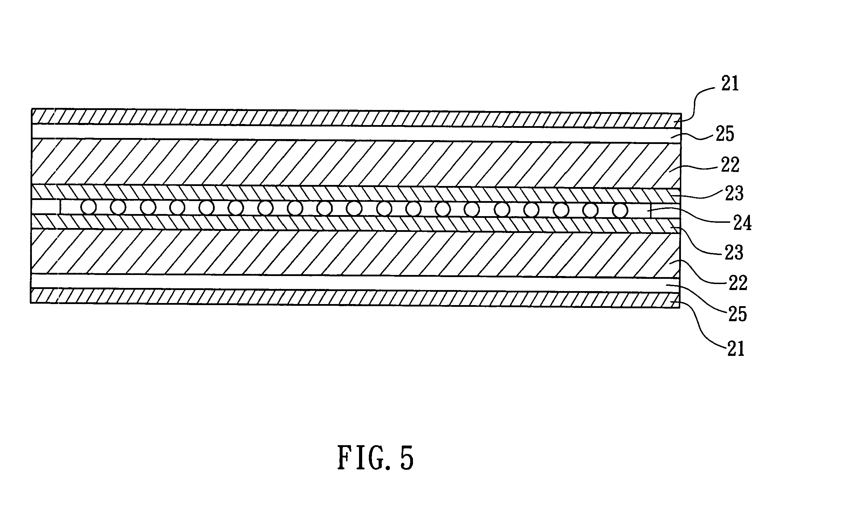

Referring to FIG. 5, another display panel having a touching circuit according to the invention is shown. The display panel comprises an intermediate liquid crystal layer 24, an upper transparent ITO layer 23 provided on the liquid crystal layer 24, a lower transparent ITO layer 23 provided under the liquid crystal layer 24, an upper glass substrate 22 provided on the upper transparent ITO layer 23, a lower glass substrate 22 provided under the lower transparent ITO layer 23, a top polarizer 21 provided above the upper transparent ITO layer 23, and a bottom polarizer 21 provided below the lower transparent ITO layer 23. Within the display panel there are further provided an upper touching circuit layer 25 sandwiched by the top polarizer 21 and the upper glass substrate 22, and a lower touching circuit layer 25 sandwiched by the bottom polarizer 21 and the lower glass substrate 22. The touching circuit layers 25 are spaced from top and bottom surfaces of the liquid crystal layer 24 respectively. By configuring as above, the touching circuit layers 25 are mounted in the display panel. As a result, it can not only save materials of manufacturing the transparent ITO glass and the transparent ITO film for touching circuit as experienced by the prior art but also save assembly and cost.

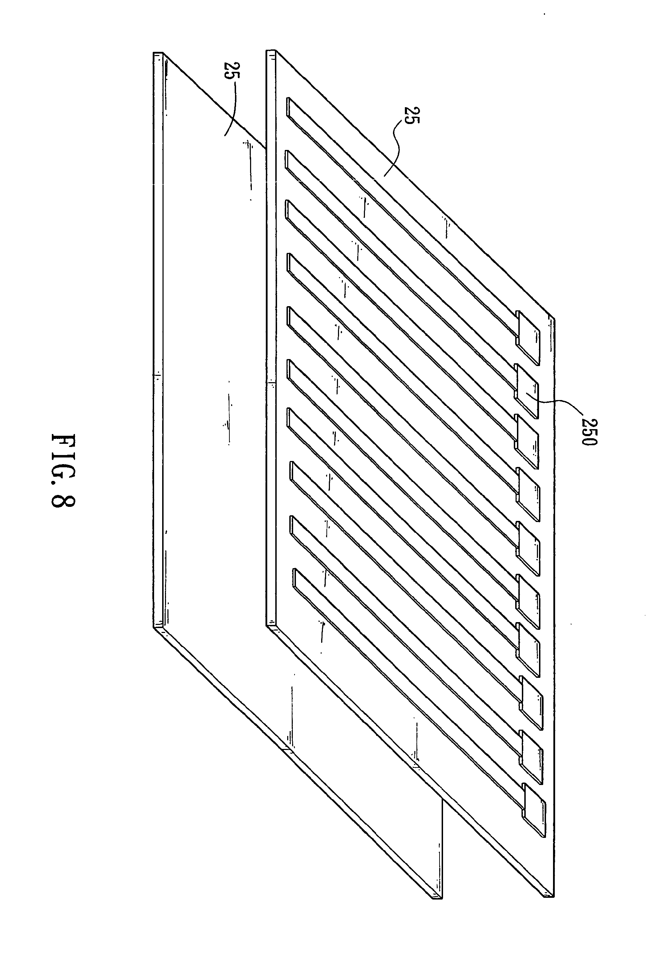

Referring to FIG. 8 in conjunction with FIG. 5, in a third preferred embodiment the upper touching circuit layer 25 is sandwiched by the top polarizer 21 and the upper glass substrate 22 and the lower touching circuit layer 25 is sandwiched by the bottom polarizer 21 and the lower glass substrate 22. The upper touching circuit layer 25 comprises a plurality of coating circuits 250 formed on its top surface above the upper glass substrate 22 facing the top polarizer 21. The coating circuit 250 is implemented as an LCD transparent circuit

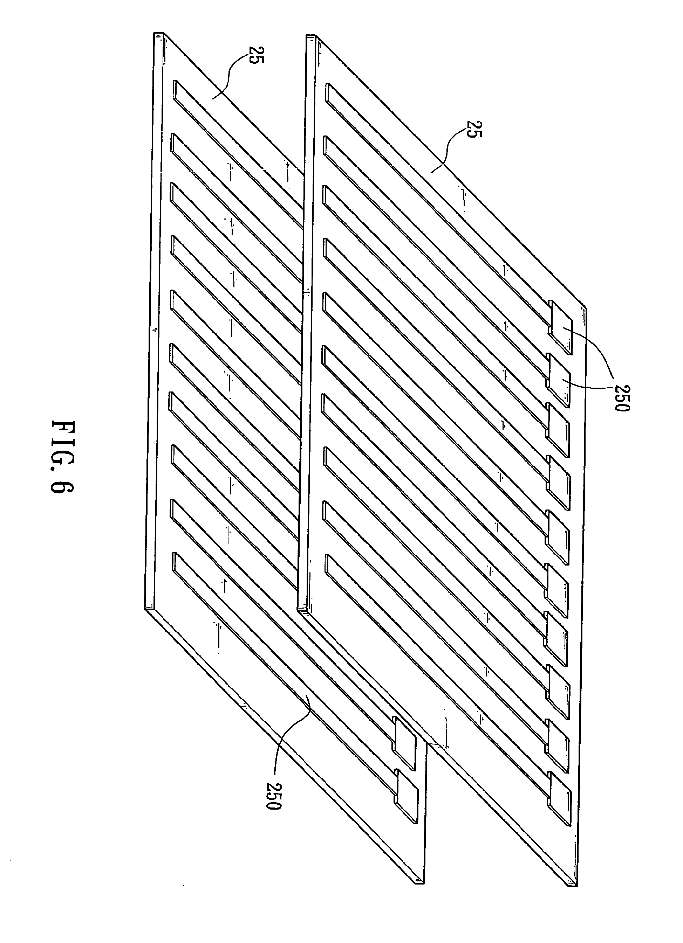

Referring to FIG. 6 in conjunction with FIG. 5, in a first preferred embodiment each of the touching circuit layers 25 comprises a plurality of coating circuits 250 formed on its top surface in which the coating circuits 250 of the upper touching circuit layer 25 are disposed above the upper glass substrate 22 facing the top polarizer 21 and the coating circuits 250 of the lower touching circuit layer 25 are disposed below the lower glass substrate 22 facing the bottom polarizer 21. Moreover, the orientation of the coating circuits 250 of the upper touching circuit layer 25 is the same as that of the coating circuits 250 of the lower touching circuit layer 25.

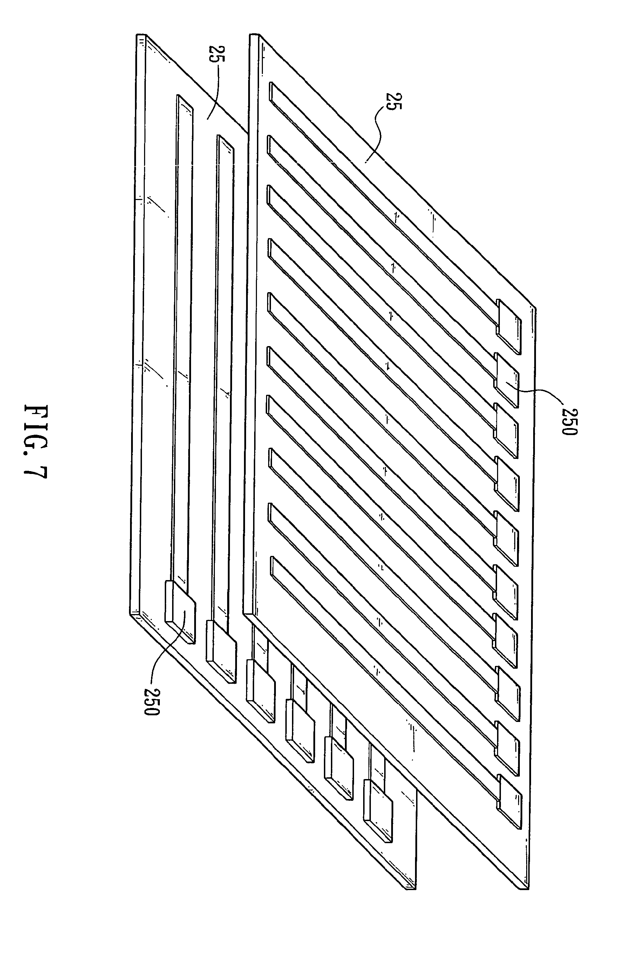

Referring to FIG. 7 in conjunction with FiG. 5, in a second preferred embodiment the orientation of the coating circuits 250 of the upper touching circuit layer 25 is perpendicular to that of the coating circuits 250 of the lower touching circuit layer 25. By configuring as above, each of the touching circuit layers 25 is sandwiched by corresponding polarizer 21 and glass substrate 22 such that an additional touch panel is eliminated. As a result, it can not only save time of assembling display panel and touch panel but also save materials of manufacturing the transparent ITO glass and the transparent ITO film for touching circuit as experienced by the prior art. Moreover, it can greatly reduce the manufacturing cost.

While the invention herein disclosed has been described by means of specific embodiments, numerous modifications and variations could be made thereto by those skilled in the art without departing from the scope and spirit of the invention set forth in the claims.

## Claims

1. A display panel comprising:
an upper polarizer;
a lower polarizer;
a lower glass substrate provided on the lower polarizer;
an upper glass substrate provided below the upper polarizer;
an upper transparent ITO layer provided under the upper glass substrate;
a lower transparent ITO layer provided on the lower glass substrate;
an intermediate liquid crystal layer sandwiched by the transparent ITO layers; and
a touching circuit layer sandwiched by the upper polarizer and the upper glass substrate and disposed above the liquid crystal layer.

2. The display panel of claim 1, wherein the touching circuit layer comprises a plurality of coating circuits formed on the upper glass substrate facing the upper polarizer.

3. The display panel of claim 1, wherein the touching circuit layer is provided above the liquid crystal layer and is sandwiched by the upper polarizer and the upper glass substrate.

4. The display panel of claim 1, wherein the touching circuit layer is provided below the liquid crystal layer and is sandwiched by the lower polarizer and the lower glass substrate.

5. A display panel comprising:
a top polarizer;
a bottom polarizer;
a lower glass substrate provided above the bottom polarizer;
an upper glass substrate provided below the top polarizer;
an upper transparent ITO layer provided under the upper glass substrate;
a lower transparent ITO layer provided on the lower glass substrate;
an intermediate liquid crystal layer sandwiched by the transparent ITO layers;
an upper touching circuit layer sandwiched by the top polarizer and the upper glass substrate; and
a lower touching circuit layer sandwiched by the bottom polarizer and the lower glass substrate;
wherein the upper and the lower touching circuit layers are spaced from top and bottom surfaces of the liquid crystal layer respectively.

6. The display panel of claim 5, wherein the upper touching circuit layer comprises a plurality of coating circuits formed on its top surface above the upper glass substrate facing the top polarizer.

7. The display panel of claim 5, wherein each of the upper and the lower touching circuit layers comprises a plurality of coating circuits formed on its top surface, the coating circuits of the upper touching circuit layer being disposed above the upper glass substrate facing the top polarizer and the coating circuits of the lower touching circuit layer being disposed below the lower glass substrate facing the bottom polarizer.

8. The display panel of claim 7, wherein an orientation of the coating circuits of the upper touching circuit layer is perpendicular to that of the coating circuits of the lower touching circuit layer.

9. The display panel of claim 8, wherein an orientation of the coating circuits of the upper touching circuit layer is the same as that of the coating circuits of the lower touching circuit layer.
